(19) Europäisches Patentamt
European Patent Office
Office européen des brevets

(11) **EP 2 329 949 B1**

(12) **EUROPEAN PATENT SPECIFICATION**

(45) Date of publication and mention
of the grant of the patent:
**16.10.2013 Bulletin 2013/42**

(51) Int Cl.:
***B32B 27/08*** (2006.01)    ***B32B 27/32*** (2006.01)
***B32B 27/36*** (2006.01)

(21) Application number: **09178204.5**

(22) Date of filing: **07.12.2009**

(54) **Multilayer film**

Mehrschichtige Folie

Film multicouche

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**08.06.2011 Bulletin 2011/23**

(73) Proprietor: **Flextrus Group AB
221 00 Lund (SE)**

(72) Inventor: **Nideborn, Karl
227 31 Lund (SE)**

(74) Representative: **Valea AB
Anna Lindhs Plats 4
211 19 Malmö (SE)**

(56) References cited:
**EP-A1- 1 097 808    US-A1- 2005 260 393**

**Description**

**Technical field**

The present invention relates to a multilayer film having low water vapour permeability (WVP), i.e. a high water vapour barrier, relative to the amount of a non-polar barrier material used. The multilayer film of the present invention thermoform well and is suitable for blister packaging sheets as well as for food packaging, medical barrier and general purpose films.

**Background of the invention**

Many conventional films for use with packages, e.g. pharmaceutical packages, as dust and/or moisture barriers typically include polymers that are formed from halogenated molecules such as polyvinyl chloride (PVC), polyvinylidene chloride (PvDC), and/or fluorinated-chlorinated resins such as Aclar®. Although they are effective as dust and/or moisture barriers, films formed from such halogenated molecules create environmental hazards. For example, upon manufacture or disposal of these films, some of the halogenated molecules are released into the environment in a gaseous form and contribute to the environmental pollution.

Thus, a drawback with conventional films formed from halogenated molecules such as polyvinyl chloride (PVC), polyvinylidene chloride (PvDC), and/or fluoropolymers are that they contribute to the environmental pollution. For example, hydrochloric acid is released during incineration of polyvinylidene chloride PvDC and PVC.

Producing packaging of a multilayer film due to the aggregate properties of the multilayer film is known. Multilayer films can be produced by co-extrusion, whereby two or more layers of material, e.g. melt streams of polymers, are passed through a die. The materials are fused together into a multilayered structure and are allowed to cool. The layer thicknesses are controlled by the relative speeds, polymer viscosity and the output of the individual extruders delivering the materials to the die. Once the multilayer film has been extruded, the plastic films can be shaped into packaging, e.g. containers, by subjecting them to a thermoforming process.

Further, pharmaceutical packages such as blister packaging are often manufactured of a multilayered film and by means of a thermoforming process.

The moisture barrier property, e.g. the water vapour barrier property, of a film is an important characteristic in packaging application, since the moisture transmission through a container made of the film may adversely affect the contents, especially in applications where the packaging contains pharmaceuticals, food products, and the like, which products are sensitive to moisture. Optical properties such as haze and transparency are also important in packaging applications. It is desirable that the packaging being clear so that the product is viewable by the customer.

In order to have a low water vapour permeability, i.e. a high water vapour barrier, conventional flouropolymer packaging usually comprises an aluminium layer that also create environmental hazards during e.g. manufacture or disposal. Further, a packaging comprising an aluminium layer has the drawback of not being thermoformable and is thus not suitable for e.g. blister packaging.

JP2005027505 describes packaging materials for fats and oil processed products, which has a preset water vapour and oxygen permeability when filled with edible oil. By blow moulding, bottles for the edible oil are produced of the packaging material. The packaging material disclosed prevents that moisture and oxygen invade the bottle walls of a bottle manufactured of the packaging material, which moisture and oxygen otherwise would cause the edible oil to become cloudy or deteriorated. Further, the packaging material disclosed comprises a multilayer structure comprising three, four or five layers. The packaging material may be configured of the five layers multilayer structure:

    PET / AD / COC / AD / PET,

wherein PET is polyethylene terephthalate, AD is adhesive, and COC is cyclo-olefin copolymer.

JP2005027505 and EP 1 097 808 A1 describes a multilayer plastic envelop having the following structure:

    PET / COC / PET / COC / PET

In this multilayer plastic envelop no adhesive is needed between the COC and PET layers, since the five layers are fixed by the bottle-shape after the blow moulding procedure.

By Tekni-plex the following multilayer structure is also known:

    PETG / AD / COC / AD / PETG

wherein PETG is polyethylene terephthalate glycol, AD is adhesive, and COC is cyclo-olefin copolymer.

A drawback with the prior art packaging material is that the water vapour barrier is reduced by increasing the thickness of the COC layer in the structure, and since COC is costly the costs for the packaging material increases as the water vapour barrier is reduced.

**Summary of the invention**

An aim of the present invention is to provide a multilayer film having a multilayer structure comprising polar and non-polar layers, in which the non-polar material, e.g. COC, is more efficiently used as compared to the prior art multilayer structures comprising COC and a multilayer film that at the same time provides a better, i.e. a higher, water vapour barrier (i.e. a lower water vapour permeability) as compared to the prior art multilayer structures comprising COC. By means of the present invention, the inventive multilayer film comprising a predetermined amount of COC will have an increased water vapour barrier, i.e. a reduced water vapour permeability, as compared to a prior art multilayer structure comprising the same predetermined amount of COC.

The aim of the present invention is fulfilled by a multilayer film having a low water vapour permeability relative to the amount of a non-polar barrier material used.

The inventive multilayer film comprises a plurality of multilayer film sections, each multilayer film section being a multilayer structure comprising a first outer film layer, a second outer film layer, and an inner film layer; the inner film layer being arranged between the first and second outer film layers; and in that the first and second outer film layers comprises a polar material and the inner film layer comprises a non-polar material.

The present invention also relates to a packaging comprising the inventive multilayer film and to a method for manufacturing the multilayer film. The method comprises co-extruding a multilayer web comprising: j+1 layers of a polar material; j layers of a non-polar material; and (j+1)+j-1 layers of an adhesive, j being an integer equal to 1 or larger, wherein the j layers of a non-polar material and the j+1 layers of a polar material being arranged as alternate layers having one of the adhesive layers in between, and wherein the outermost layers of the co-extruded multilayer web are the polar material layers.

Embodiments of the present invention are defined in the dependent claims.

**Brief description of the drawings**

The present invention will be described in more detail with reference to the accompanying drawings in which:

FIG. 1 schematically shows a cross-sectional view of an embodiment of a multilayer film according to the present invention;
FIG. 2 schematically shows a cross-sectional view of a first embodiment of a multilayer film section of a multilayer film according to the present invention;
FIG. 3 schematically shows a cross-sectional view of a second embodiment of a multilayer film section of a multilayer film according to the present invention;
FIG. 4 schematically shows a cross-sectional view of a third embodiment of a multilayer film section of a multilayer film according to the present invention;
FIG. 5A schematically shows a cross-sectional view of multilayer film web; and
FIG. 5B schematically shows a plurality of multilayer film sections manufactured from the multilayer web forming an embodiment of a multilayer film according to the present invention.

**Detailed description of embodiments of the invention**

The present invention will now be described in more detail with reference to various examples and the accompanying drawings.

The present invention relates to a multilayer film having a low water vapour permeability, i.e. a high water vapour barrier relative to the amount of a barrier material used. By a low water vapour permeability is meant a water vapour permeability that is lower than 1 $g/m^2$/atm/day at a temperature of 38 degrees Celsius and a relative humidity of 90% across the multilayer film. By a low water vapour permeability relative to the amount of a non-polar barrier material used is meant a water vapour permeability that is lower than the water vapour permeability of a prior art material comprising the same amount of non-polar barrier material as the inventive multilayer film but in which prior art material the non-polar barrier material is not as efficiently used as in the present invention. By means of the present invention, a multilayer film is provided that has a low water vapour permeability that is 30-50% better than a prior art film having the same amount of the non-polar barrier material as the present invention.

For example, a prior art material comprises the following multilayer structure:

APET /AD/ COC /AD/ APET,

wherein PET is polyethylene terephthalate, AD is adhesive, and COC is cyclo-olefin copolymer.

In such a prior art material, the APET layer has a thickness of 150 micrometers, the adhesive layer has a thickness of 10 micrometer and the COC layer has a thickness of 100 micrometer. Thus the total material thickness is 420 micrometer. For such a prior art material the water vapour permeability has been determined to be 0,205 g/m$^2$/atm/day at a temperature of 38 degrees Celsius and a relative humidity of 90% across the prior art material.

As will be discussed in more detail below, in an inventive multilayer film comprising the same total amount of non-polar barrier material, e.g. COC, as the prior art material, and having the same total material thickness as the prior art material, the water vapour permeability has been determined to be 0,140 g/m$^2$/atm/day at a temperature of 38 degrees Celsius and a relative humidity of 90% across the inventive multilayer film. Further, this inventive multilayer film comprised 5 multilayer film sections, each multilayer film section comprising one layer of COC.

Thus by such an inventive multilayer film the water vapour barrier has been improved 32% as compared to the prior art material comprising the same amount of non-polar barrier material. Further, at the same cost of COC, a multilayer film having a 32% better water vapour barrier is provided.

A multilayer film having a low water vapour permeability, i.e. a high water vapour barrier, could also be defined as a multilayer film having a low moisture vapour transmission rate (MVTR), also referred to as a low water vapour transmission rate (WVTR). The moisture vapour transmission rate of a material is a measure of the passage of water vapor through the material.

For a multilayer film having a high water vapour barrier, the moisture vapour transmission rate is lower than 1 g/m$^2$/atm/day at a temperature of 38 degrees Celsius and a relative humidity of 90% across the multilayer film.

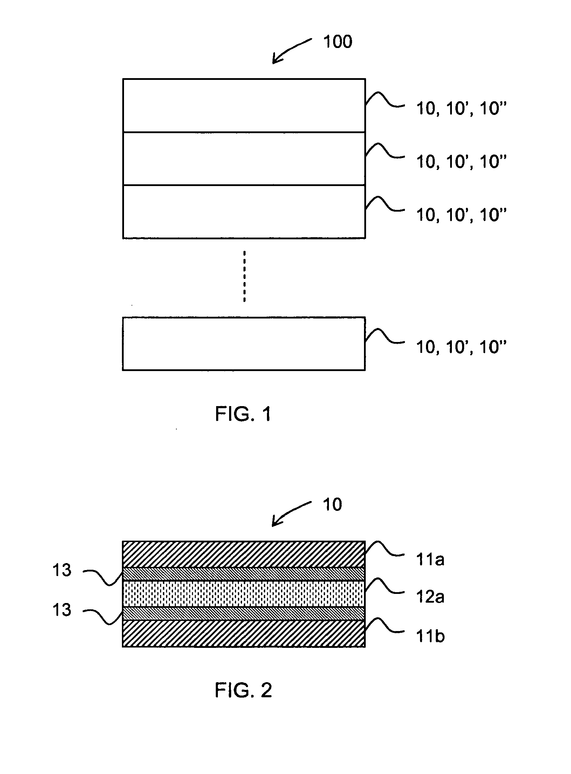

FIG. 1 schematically shows a cross-sectional view of a first embodiment of a multilayer film 100 according to the present invention. As illustrated, the multilayer film 100 comprises a plurality of multilayer film sections 10, 10', 10", and each multilayer film section 10, 10', 10" comprising several film layers. Thus, and as will be described in more detail below, the inventive multilayer film comprises a plurality of multilayer structures, herein referred to as multilayer film sections, as compared to the prior art structure which comprises one multilayer structure.

In embodiments, the multilayer film 100 comprises 10 - 80 multilayer film sections 10, 10', 10"; preferably 20 - 60 multilayer film sections 10, 10', 10"; or more preferably 30 - 40 multilayer film sections 10,10',10'.

As schematically shown in the cross-sectional views in FIG. 2-4, the multilayer film section 10, 10', 10" comprises a first outer film layer 11 a, a second outer film layer 11 b, and a first inner film layer 12a. The first inner film layer 12a is arranged between the first outer film layer 11 a and the second outer film layer 11 b.

The first outer film layer 11 a and the second outer film layer 11 b comprise a polar material and the inner film layer 12a comprises a non-polar material.

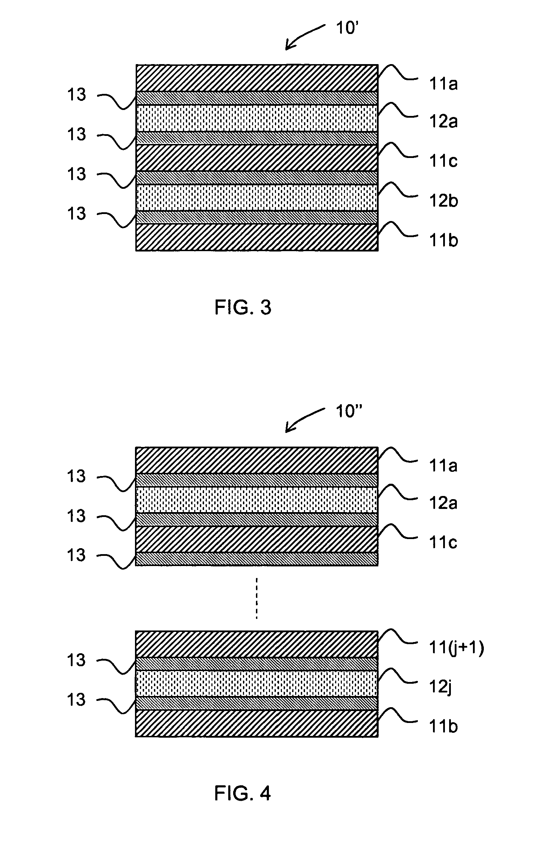

As schematically shown in FIG. 3, the multilayer film section 10' comprises in addition to the first inner film layer 12a, a second inner film layer 12b comprising a non-polar material. Further, the multilayer film section 10' comprises in addition to the first outer film layer 11 a and a second outer film layer 11 b, a third inner film layer 11c comprising a polar material. The third inner film layer 11c being arranged between the first inner film layer 12a, and the second inner film layer 12b.

As schematically shown in FIG. 4, the multilayer film section 10" may comprise a plurality of layers of the polar film material and a plurality of layers of the non-polar film material. In the embodiment shown, the multilayer film section 10" comprises j+1 layers of the polar material, i.e. layers 11 a to 11 (j+1) and j layers of the non-polar material, i.e. layers 12a to 12j, j being an integer equal to 1 or larger.

In embodiments, the multilayer film section 10, 10', 10" may further comprise an adhesive layer 13 arranged between the layers 11, 12 constituting the multilayer film section 10, 10', 10" in order to adhere the layers to each other. For example, in FIG. 4, the multilayer film section 10" comprises j+1 layers of a polar material 11 a-11 (j+1);j layers of a non-polar material 12a-12j; and (j+1)+j-1 layers of an adhesive material, j being an integer equal to 1 or larger. The polar material layers and the non-polar material layers are arranged as alternate layers having an adhesive layer in between, and the outermost layers of multilayer film section 10" are the polar material layers 11 a, 11(j+1).

In embodiments, j is preferably equal to 4 or larger.

The polar material comprises preferably amorphous polyethylene terephthalate, APET. However, the polar material may comprise other suitable polar materials such as polyethylene naphthalate (PEN) and polycarbonate (PC).

The non-polar material comprises preferably a cyclo-olefin copolymer, COC. The cyclo-olefin copolymer, COC, is an amorphous, transparent copolymer based on the polymerization of ethylene and nordbornene using metallocene catalysts. The cyclo-olefin copolymer, COC, comprises ethylene norbornene. A suitable range of ethylene content is about 30 mol% to about 90 mol% and a suitable range of norbonene content is between about 10 mol% to about 70 mol%. Preferably, the range of ethylene content is between about 55 mol% and about 75 mol% and the norbonene content is preferably between about 25 mol% and about 45 mol%. The cyclo-olefin copolymer, COC, is further a thermoplastic material having a glossy, crystal clear appearance with high modulus, i.e. equal to or higher than 1500 MPa.

In embodiments, the adhesive layer 13 comprises a polar material, such as co-polyeten, ethylene copolymers; e.g. meta acrylate, ethylene meta acrylate (EMA), ethylene butylacrylate (EBA); or terpolymers.

The multilayer film material according to the present invention may be manufactured by means of co-extrusion. In such embodiments, the multilayer film section 10, 10', 10" is made by means of a co-extruded multilayer film web 200 that is cut along its longitudinal direction to form a plurality of multilayer film sections 10, 10', 10". The multilayer film sections 10, 10', 10" are arranged on top of each other.

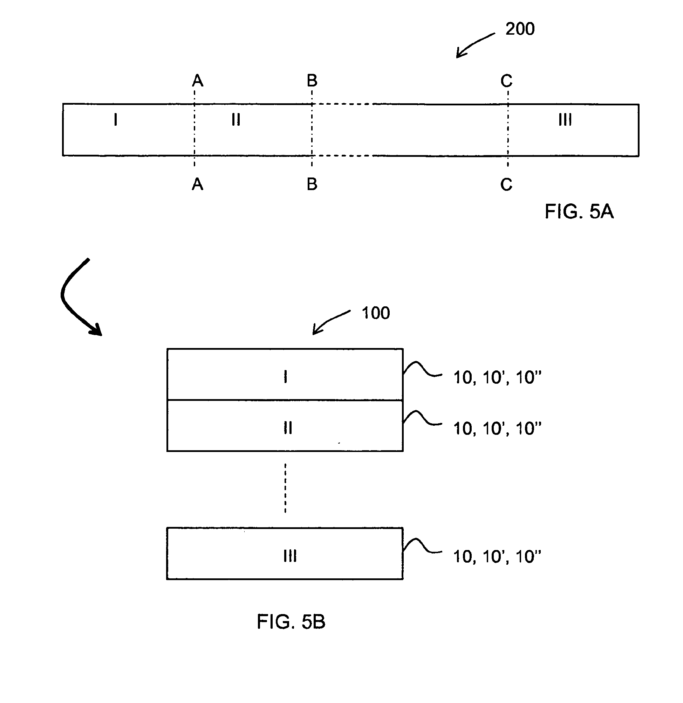

FIG. 5A schematically illustrates a cross-sectional view of an embodiment of a multilayer film web 200 that is cut in its longitudinal direction along the cross-sectional lines A-A, B-B, and C-C, to form a plurality of multilayer film sections 10, 10', 10" that is arranged on top of each other as schematically illustrated in FIG. 5B to form a multilayer film 100.

The inventor of the present invention has realised that the permeability of an inventive multilayer film 100 comprising a plurality of multilayer film sections 10, 10', 10", does not following the conventional permeability law, and therefore cannot be calculated as

$$1/Ptot = 1/P1 + 1/P2 + … + 1/Pn,$$

wherein

Ptot is the total permeability of a conventional multilayer film;
P1 is the permeability of the first layer of the multilayer film;
P2 is the permeability of the second layer of the multilayer film; and
Pk is the permeability of the n:th layer of the multilayer film;

Instead, as realised by the present inventor the permeability P of an inventive multilayer film 100 is determined by:

$$1/P = k*(1/Ptot) = k* (1/P1 + 1/P2 + … + 1/Pn),$$

wherein

k is a constant larger than 1, and approximately in the range of approximately 1, 4- 3, e.g. in the range of approximately 1, 4- 2. This may also be expressed as the inventive multilayer film has a permeability P that is 30%- 50% better than conventional multilayer films.

As described in the example above, the multilayer film according to an embodiment of the present invention could improve the water vapour barrier with 32%, giving the constant k to be 1.46.

In embodiments, the co- extruded multilayer film web 200 is cut along its longitudinal direction into 4 — 100 multilayer film sections 10, 10', 10", preferably into 10- 80 multilayer film sections 10, 10', 10", more preferably into 20- 60 multilayer film sections 10, 10', 10", or even more preferably into 30 — 50 multilayer film sections 10, 10', 10".

In an embodiment, the co-extruded multilayer film web 200 is cut along its longitudinal direction into 10 multilayer film sections 10,10',10".

According to embodiments, the total thickness of the multilayer film material 100 is in the range of 100 to 1000 micrometer. Preferably, the thickness of the multilayer film material 100 is approximately 250 micrometer.

In embodiments, the thickness of each of the first and second outer film layers 11 a, 11 b, and the third inner film layer 11 c, e.g. the polar layers, is in the range of 8 to 100 micrometer. Preferably, the thickness of each of the first and second outer film layers 11 a, 11 b, and the inner film layer 11c - 11(j+1) is approximately 20-40 micrometer.

In embodiments, the thickness of the inner film layer(-s) 12a, 12b —12j, e.g. the non-polar layer, is in the range of 5 to 80 micrometer. Preferably, the thickness of the inner film layer 12a, 12b - 12j is approximately 55 micrometer.

In embodiments, the thickness of the adhesive layer 13 is in the range of 1 to 20 micrometer. Preferably, the thickness of the adhesive layer 13 is approximately 7 micrometer.

The present invention also relates to a packaging, such as a blister packaging or another packaging suitable for pharmaceuticals, to a food packaging or to other kinds of packaging benefiting of a high water vapour barrier.

Further, the present invention also relates to a method for manufacturing a multilayer film 100 having a low water vapour permeability, i.e. a high water vapour barrier, relative to the amount of a non- polar barrier material used.

In embodiments, the method comprises:

- co-extruding a multilayer web 200 comprising a first outer film layer 11 a, a second outer film layer 11 b, an inner film layer 12a; and at least two adhesive layers (13); the inner film layer 12a being arranged between the first and second outer film layers 11 a, 11 b, and between each film layer an adhesive layer being arranged; the first and second outer film layers 11a, 11 b, and the adhesive layers (13) comprising a polar material and the inner film layer 12a comprises a non-polar material,

- cutting the co- extruded multilayer web 200 along its longitudinal direction into a plurality of multilayer film sections 10, 10', 10", and
- arranging the plurality of multilayer film sections 10,10',10" on top of each other to form a multilayer film 100.

In embodiments, the method comprises:

- co-extruding a multilayer web 200 comprising j+1 layers of a polar material 11 a-11 (j+1);j layers of a non-polar material 12a-12j; and (j+1)+j-1 layers of an adhesive layer 13, j being an integer equal to 1 or larger, wherein the j+1 layers of a polar material 11a-11 (j+1) and the j layers of a non-polar material 12a-12j being arranged as alternate layers having one of the adhesive layers 13 in between, and wherein the outermost layers of the co-extruded multilayer web 200 are the polar material layers 11a, 11 (j+1),
- cutting the co- extruded multilayer web 200 along its longitudinal direction into a plurality of multilayer film sections 10, 10', 10", and
- arranging the plurality of multilayer film sections 10,10',10" on top of each other to form a multilayer film 100.

However, it should be understood that the multilayer film 100 may be directly produced by an adaptor that splits the layers into a multilayer structure.

In other embodiments, the method therefore comprises:

- co-extruding a multilayer film 100 comprising j+1 layers of a polar material 11a-11 (j+1), j layers of a non-polar material 12a-12j, and (j+1)+j-1 layers of an adhesive 13, j being an integer equal to 1 or larger, so that the polar material layers 11 a-11 (j+1) and the non-polar material layers 12a-12j are arranged as alternate layers having an adhesive layer 13 in between, and so that the outermost layers of the multilayer web 200 are the polar material layers 11 a, 11(j+1).

In embodiments of the method, the extruded multilayer film web 200 is cut along its longitudinal direction into 4 — 100 multilayer film sections 10, 10', 10", preferably into 10- 80 multilayer film sections 10, 10', 10", more preferably into 20- 60 multilayer film sections 10, 10', 10", or even more preferably into 30 — 50 multilayer film sections 10, 10', 10".

While the invention has been described in connection with exemplifying embodiments and examples, modifications to the embodiments, examples and additional applications within the scope of the invention will be readily apparent to those skilled in the art.

## Claims

1. A multilayer film (100) having a low water vapour permeability, **characterised in that** the multilayer film (100) comprises a plurality of multilayer film sections (10, 10', 10"), each multilayer film section (10, 10', 10") being a multilayer structure comprising a first outer film layer (11 a), a second outer film layer (11b), and an inner film layer (12a); the inner film layer (12a) being arranged between the first and second outer film layers (11 a, 11 b); and **in that** the first and second outer film layers (11 a, 11 b) comprises a polar material, wherein the polar material comprises amorphous polyethylene terephthalate, APET; polyethylene naphthalate, PEN; or polycarbonate, PC, and the inner film layer (12a) comprises a non-polar material comprising cyclo-olefin copolymer, COC.

2. A multilayer film (100) according to claim 1, **characterised in that** the total thickness of the multilayer film material (100) is in the range of 100 to 1000 micrometer, preferably approximately 250 micrometer; the thickness of each of the first and second outer film layers (11a, 11b) is in the range of 8 to 100 micrometer, preferably approximately 90 micrometer; and the thickness of the inner film layer (12a) is in the range of 5 to 80 micrometer, preferably approximately 55 micrometer.

3. A multilayer film (100) according to any of the previous claims **characterised in that** the multilayer film section (10', 10") comprises j+1 layers (11a- 11 (j+1) ) of the polar material and comprises j layers (12a- 12j) of the non- polar material, j being an integer larger than 1, and the polar layers (11a- 11 (j+1) ) and the non- polar layers (12a- 12j) being arranged alternately.

4. A multilayer film (100) according to any of the previous claims **characterised by** being thermoformable.

5. A multilayer film (100) according to any of the previous claims, **characterized in that** the multilayer film (100) comprises 4- 100 multilayer film sections (10, 10', 10"), preferably 10- 80 multilayer film sections (10, 10', 10"), more preferably 20- 60 multilayer film sections (10, 10', 10"), or even more preferably 30- 50 multilayer film sections (10, 10', 10") .

6. A packaging **characterised by** a multilayer film (100) according to any of the previous claims.

7. A method for manufacturing a multilayer film (100) according to any of the claims 1- 5, the method comprising co-extruding a multilayer web (200) comprising: j+1 layers of a polar material (11a- 11 (j+1) ) ; j layers of a non- polar material (12a- 12j) ; and (j+1) +j- 1 layers of an adhesive (13), j being an integer equal to 1 or larger, wherein the j layers of a non- polar material (12a- 12j) and the j+1 layers of a polar material (11a- 11 (j+1) ) being arranged as alternate layers having one of the adhesive layers (13) in between, and wherein the outermost layers of the co-extruded multilayer web (200) are the polar material layers (11a, 11 (j+1) ) .

8. A method according to claim 7, further comprising:

   - cutting the co- extruded multilayer web (200) along its longitudinal direction into a plurality of multilayer film sections (10, 10', 10"), and
   - arranging the plurality of multilayer film sections (10,10', 10") on top of each other.

9. The method according to claim 7 or 8, wherein extruded multilayer film web (200) is cut along its longitudinal direction into 5- 100 multilayer film sections (10, 10', 10"), preferably into 10- 80 multilayer film sections (10, 10', 10"), more preferably into 20- 60 multilayer film sections (10, 10', 10"), or even more preferably into 30- 40 multilayer film sections (10, 10', 10") .


## Patentansprüche

1. Mehrschichtige Folie (100) mit geringer Wasserdampfdurchlässigkeit,
   **dadurch gekennzeichnet,**
   **dass** die mehrschichtige Folie (100) eine Vielzahl von Abschnitten (10, 10', 10") der mehrschichtigen Folie aufweist, wobei jeder Abschnitt (10, 10', 10") der mehrschichtigen Folie eine mehrschichtige Struktur ist, die eine erste äußere Folienschicht (11a), eine zweite äußere Folienschicht (11b) und eine innere Folienschicht (12a) aufweist, wobei die innere Folienschicht (12a) zwischen der ersten und der zweiten äußeren Folienschicht (11a, 11b) angeordnet ist, und **dass** die erste und die zweite äußere Folienschicht (11a, 11b) ein polares Material aufweisen, wobei das polare Material amorphes Polyethylenterephthalat (APET), Polyethylennaphthalat (PEN) oder Polycarbonat (PC) aufweist, und die innere Folienschicht (12a) ein nichtpolares Material aufweist, das ein Cycloolefin-Copolymer (COC) aufweist.

2. Mehrschichtige Folie (100) nach Anspruch 1,
   **dadurch gekennzeichnet,**
   **dass** die Gesamtdicke des mehrschichtigen Folienmaterials (100) im Bereich von 100 $\mu$m bis 1000 $\mu$m, vorzugsweise bei etwa 250 $\mu$m liegt;
   **dass** die Dicke der ersten und der zweiten äußeren Folienschicht (11a, 11b) jeweils im Bereich von 8 $\mu$m bis 100 $\mu$m, vorzugsweise bei etwa 90 $\mu$m liegt; und dass die Dicke der inneren Folienschicht (12a) im Bereich von 5 $\mu$m bis 80 $\mu$m, vorzugsweise bei etwa 55 $\mu$m liegt.

3. Mehrschichtige Folie (100) nach einem der vorstehenden Ansprüche,
   **dadurch gekennzeichnet,**
   **dass** der Abschnitt (10', 10") der mehrschichtigen Folie j + 1 Schichten (11a - 11(j+1)) des polaren Materials aufweist und j Schichten (12a - 12j) des nichtpolaren Materials aufweist, wobei j eine ganze Zahl ist, die größer als 1 ist, und die polaren Schichten (11a - 11(j + 1)) und die nichtpolaren Schichten (12a -12j) abwechselnd angeordnet sind.

4. Mehrschichtige Folie (100) nach einem der vorstehenden Ansprüche,
   **dadurch gekennzeichnet,**
   **dass** sie warmformbar ist.

**5.** Mehrschichtige Folie (100) nach einem der vorstehenden Ansprüche,
**dadurch gekennzeichnet,**
**dass** die mehrschichtige Folie (100) 4 bis 100 Abschnitte (10, 10', 10") der mehrschichtigen Folie, vorzugsweise 10 bis 80 Abschnitte (10, 10', 10") der mehrschichtigen Folie, stärker bevorzugt 20 bis 60 Abschnitte (10, 10', 10") der mehrschichtigen Folie oder noch stärker bevorzugt 30 bis 50 Abschnitte (10, 10', 10") der mehrschichtigen Folie aufweist.

**6.** Verpackung,
**gekennzeichnet durch** eine mehrschichtige Folie (100) nach einem der vorstehenden Ansprüche.

**7.** Verfahren zum Herstellen einer mehrschichtigen Folie (100) nach einem der Ansprüche 1 bis 5,
wobei das Verfahren folgendes aufweist:

Coextrudieren einer mehrschichtigen Bahn (200), die folgendes aufweist:

- $j + 1$ Schichten eines polaren Materials (11a - 11($j + 1$));
- $j$ Schichten eines nichtpolaren Materials (12a - 12j); und
- ($j + 1$) + $j$ - 1 Schichten eines Klebemittels (13), wobei $j$ eine ganze Zahl ist, die gleich 1 oder größer als 1 ist, wobei die $j$ Schichten des nichtpolaren Materials (12a - 12j) und die $j + 1$ Schichten des polaren Materials (11a - 11($j + 1$)) als abwechselnde Schichten angeordnet sind, die dazwischen eine der Klebemittelschichten (13) aufweisen, und

wobei die äußeren Schichten der coextrudierten mehrschichtigen Bahn (200) die Schichten (11a, 11($j + 1$)) des polaren Materials sind.

**8.** Verfahren nach Anspruch 7,
das ferner folgendes aufweist:

- Schneiden der coextrudierten mehrschichtigen Bahn (200) entlang ihrer Längsrichtung in eine Vielzahl von Abschnitten (10, 10', 10") der mehrschichtigen Folie und
- Anordnen der Vielzahl von Abschnitten (10, 10', 10") der mehrschichtigen Folie übereinander.

**9.** Verfahren nach Anspruch 7 oder 8,
wobei die extrudierte mehrschichtige Folienbahn (200) entlang ihrer Längsrichtung in 5 bis 100 Abschnitte (10, 10', 10") der mehrschichtigen Folie, vorzugsweise in 10 bis 80 Abschnitte (10, 10', 10") der mehrschichtigen Folie, stärker bevorzugt in 20 bis 60 Abschnitte (10, 10', 10") der mehrschichtigen Folie oder noch stärker bevorzugt in 30 bis 40 Abschnitte (10, 10', 10") der mehrschichtigen Folie zerschnitten wird.

**Revendications**

**1.** Film multicouche (100) présentant une perméabilité à la vapeur d'eau faible, **caractérisé en ce que** le film multicouche (100) comprend une pluralité de sections de film multicouche (10, 10', 10"), chaque section de film multicouche (10, 10', 10") étant une structure multicouche comprenant une première couche de film extérieure (11a), une seconde couche de film extérieure (11b) et une couche de film intérieure (12a) ; la couche de film intérieure (12a) étant disposée entre les première et seconde couches de film extérieures (11a, 11b); et **en ce que** les première et seconde couches de film extérieures (11a, 11b) comprennent un matériau polaire, dans lequel le matériau polaire comprend du polyéthylène téréphtalate amorphe, APET ; du polyéthylène naphtalate, PEN ; ou du polycarbonate, PC et la couche de film intérieure (12a) comprend un matériau non polaire comprenant un copolymère de cyclooléfine, COC.

**2.** Film multicouche (100) selon la revendication 1, **caractérisé en ce que** l'épaisseur totale du matériau de film multicouche (100) est de 100 à 1 000 micromètres, de préférence approximativement de 250 micromètres ; l'épaisseur de chacune des première et seconde couches de film extérieures (11a, 11b) est de 8 à 100 micromètres, de préférence approximativement de 90 micromètres ; et l'épaisseur de la couche de film intérieure (12a) est de 5 à 80 micromètres, de préférence approximativement de 55 micromètres.

**3.** Film multicouche (100) selon l'une quelconque des revendications précédentes, **caractérisé en ce que** la section de film multicouche (10', 10") comprend j+1 couches (11a- 11 (j+1) ) du matériau polaire et comprend j couches (12a- 12j) du matériau non polaire, j étant un nombre entier plus grand que 1, et les couches polaire (11a- 11 (j+1) ) et les couches non polaires (12a- 12j) étant disposées alternativement.

4. Film multicouche (100) selon l'une quelconque des revendications précédentes, **caractérisé en ce qu'**il est thermoformable.

5. Film multicouche (100) selon l'une quelconque des revendications précédentes, **caractérisées en ce que** le film multicouche (100) comprend 4 à 100 sections de film multicouche (10, 10', 10"), de préférence 10 à 80 sections de film multicouche (10, 10', 10"), de manière plus préférée 20 à 60 sections de film multicouche (10, 10', 10") ou de manière encore plus préférée 30 à 50 sections de film multicouche (10, 10', 10").

6. Emballage **caractérisé par** un film multicouche (100) selon l'une quelconque des revendications précédentes.

7. Procédé de fabrication d'un film multicouche (100) selon l'une quelconque des revendications 1 à 5, le procédé comprenant la coextrusion d'une bande multicouche (200) comprenant : j+1 couche d'un matériau polaire (11a- 11 (j+1) ) couches d'un matériau non polaire (12a- 12j)  ; et (j+1) +j- 1 couches d'un adhésif (13)  ; j étant un nombre entier égal ou plus grand que 1, dans lequel les j couches d'un matériau non polaire (12a- 12j) et les j+1 couche d'un matériau polaire (11a- 11 (j+1) ) étant disposées comme des couches alternées avec l'une des couches adhésives (13) au milieu, et dans lequel les couches les plus extérieures de la bande multicouche coextrudée (200) sont les couches de matériau polaire (11a, 11 (j+1) ) .

8. Procédé selon la revendication 7, comprenant en outre :

- la découpe de la bande multicouche coextrudée (200) le long de sa direction longitudinale en une pluralité de sections de film multicouche (10, 10', 10"), et
- la disposition de la pluralité de sections de film multicouche (10, 10', 10") les unes sur les autres.

9. Procédé selon la revendication 7 ou 8, dans lequel la bande de film multicouche extrudée (200) est découpée le long de sa direction longitudinale en 5 à 100 sections de film multicouche (10, 10', 10"), de préférence en 10 à 80 sections de film multicouche (10, 10', 10"), de manière plus préférée en 20 à 60 sections de film multicouche (10, 10', 10") ou de manière encore plus préférée en 30 à 40 sections de film multicouche (10, 10', 10").

100

10, 10', 10"

10, 10', 10"

10, 10', 10"

10, 10', 10"

**FIG. 1**

10

13

13

11a

12a

11b

**FIG. 2**

13 — 11a
13 — 12a
13 — 11c
13 — 12b
13 — 11b

10'

**FIG. 3**

13 — 11a
13 — 12a
13 — 11c

10"

13 — 11(j+1)
13 — 12j
11b

**FIG. 4**

200

A          B               C

| I | II | III |

A          B               C

FIG. 5A

100

| I |
| II |

10, 10', 10''

10, 10', 10''

| III |

10, 10', 10''

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005027505 B
- EP 1097808 A1